# NEW EUROPEAN PATENT SPECIFICATION

(11) **EP 2 980 260 B2**
(45) Date of publication and mention of the opposition decision: **28.02.2024**
(45) Mention of the grant of the patent: 14.03.2018
(21) Application number: 14774993.1
(22) Date of filing: 19.03.2014
(51) Int. Cl.: C23C 2/12, C23C 2/06, C23C 2/02, C23C 2/26, C22C 21/10

(54) **Al-Zn-BASED PLATED STEEL SHEET**
AL-ZN-BASIERTES PLATTIERTES STAHLBLECH
FEUILLE D'ACIER PLAQUÉE À BASE D'Al-Zn

(30) Priority: 25.03.2013 JP 2013061507
(43) Date of publication of application: 03.02.2016
(73) Proprietor: JFE Steel Corporation, Tokyo 100-0011 (JP)
(72) Inventor: MORIMOTO, Minako, Tokyo 100-0011 (JP); YOSHIDA, Masahiro, Tokyo 100-0011 (JP); ANDO, Satoru, Tokyo 100-0011 (JP)
(74) Representative: Haseltine Lake Kempner LLP
(86) International application number: PCT/JP2014/001587
(87) International publication number: WO 2014/156073

(56) References cited:
- EP-A1- 2 537 954
- EP-A1- 2 957 648
- WO-A1-2006/105593
- WO-A1-2011/088518
- JP-A- 2001 316 791
- JP-A- 2001 316 791
- JP-A- 2002 047 549
- JP-A- 2004 143 506
- JP-A- 2005 272 922
- JP-A- 2005 272 922
- JP-A- 2009 120 948
- JP-A- 2013 189 671
- JP-A- 2014 148 713
- US-A1- 2003 003 321
- US-A1- 2013 059 086
- GalvInfoNote 2.4. "The role of Aluminium in Continuous Hot-Dip Galvanazing"
- GalvInfoNote 13 of Sept 03 "The Spangle on Hot-Dip Galvanized Steel Sheet"
- https://www.emcotest.com/en/the-world-of-h ardness-testing/hardness-know-how/theory-o f-hardness-testing/vickers-52/how-to-read- and-present-a-vickers-hardness-value-186/

## Description

### Technical Field

The present invention relates to an Al-Zn-coated steel sheet that exhibits excellent corrosion resistance after painting.

### Background Art

Al-coated steel sheets having heat resistance and corrosion resistance superior to those of hot-dip galvanized steel sheets have been used in automobile exhaustive parts, fuel tanks, construction materials, heating equipment, etc. When Al-coated steel sheets are painted and paint films are scratched, the Al-coated steel sheets can suppress occurrence of red rust. However, it is difficult to suppress occurrence of blistering from the scratches and thus Al-coated steel sheets do not offer the highest corrosion resistance after painting. Thus, they are not suitable for use in automobile exterior panels that are highly noticeable.

Blistering, which is one of indicators of corrosion resistance after painting, occurs when a local cell is formed under a paint film where the scratched portion exposing the base steel sheet functions as a cathode, an end portion of the corrosion functions as an anode, and the very tip of the corrosion functions as a cathode. If Si is added to a plating bath to suppress growth of an interfacial alloy layer in the Al-coated steel sheet and Si is contained in the upper layer of a coating, Si entrapped in the coating upper layer forms a Si phase. Since the Si phase locally serves as a cathode site, a local cell is formed under the paint film, blistering readily occurs, and corrosion resistance after painting is degraded.

Patent Literature 1 and Patent Literature 2 propose techniques for improving corrosion resistance that address the above-described issue. Patent Literature 1 discloses an Al-Zn-coated steel sheet exhibiting good lap-joint corrosion resistance due to addition of Ca. Patent Literature 2 discloses an Al-Zn-coated steel sheet that exhibits good coating appearance and good lap-joint corrosion resistance where Ca is added and particular oxides in a surface layer portion of a base steel sheet are suppressed. However, according to the composition ranges described in Patent Literature 1 and Patent Literature 2, occurrence of blistering is not necessarily suppressed and corrosion resistance after painting is not satisfactory. Further prior art documents that apply the method of hot dip sheet plating with an aim to product a corrosion resistant coating with a favourable appearance include Patent Literature 3, Patent Literature 4, Patent Literature 5 and Patent Literature 6.

### Citation List

### Patent Literature

PTL 1: Japanese Unexamined Patent Application Publication No. 2011-6785
PTL 2: Japanese Unexamined Patent Application Publication No.2012-126993
PTL 3: Japanese Patent Application Publication No. 2001-316791
PTL 4: European Patent Application: EP 2 537 954 A1
PTL 5: Japanese Patent Application Publication No. 2004-143506
PTL 6: US Patent Application No. 2013-059086

### Summary of Invention

### Technical Problem

The present invention has been made under the aforementioned circumstances and aims to provide an Al-Zn-coated steel sheet having good corrosion resistance after painting and capable of suppressing occurrence of blistering.

### Solution to Problem

The inventors of the present invention have conducted extensive studies to address the issue described above and made following findings.

The Al-Zn coating on the steel sheet surface is to include two layers. The amount of Si added to suppress growth of an interfacial alloy layer, which is the lower layer, is minimized so that formation of a Si phase, which is a cause of blistering and degradation of corrosion resistance after painting and which is composed of simple substance Si, is suppressed. Furthermore, Ca or Ca and Al are added to the coating upper layer so that Si in the upper layer forms compounds with Ca or Ca and Al. As a result, blistering is suppressed and corrosion resistance after painting is improved.

Excessive addition of Ca induces dissolution of the coating, causes blistering, and degrades corrosion resistance after painting. Accordingly, it has been found that excellent corrosion resistance after painting, which has not been achieved in related art, can be achieved by limiting the amount of added Ca to the possible minimum level required for Ca to form compounds with remaining Si that does not form an interfacial alloy layer.

The present invention has been made based on the above-described findings and can be summarized as follows.
[1] An Al-Zn-coated steel sheet according to claim 1.
   PTL 7: EP-A-2957648 is available under A.54(3) EPC. Example 15 of PTL 7 is disclaimed.
[2] The Al-Zn-coated steel sheet of [1], wherein the upper layer contains 50 to 85 mass% Al, 11 to 49.8 mass% Zn, 0.1 to 2.0 mass% Si, 0.001 to 2.0 mass% Ca, and the balance being Fe and unavoidable impurities.
[3] The Al-Zn-coated steel sheet of [1] or [2], wherein the upper layer does not contain a Si phase composed of simple substance Si.
[4] The Al-Zn-coated steel sheet of any one of [1] to [3], wherein Si in the upper layer forms an intermetallic compound with at least one element selected from Al, Ca, and Fe.

### Advantageous Effects of Invention

According to the present invention, an Al-Zn-coated steel sheet having good corrosion resistance after painting is obtained. The Al-Zn-coated steel sheet of the present invention uses less Zn, which is a dwindling resource, and is expected to serve as an eco-friendly coated steel sheet that replaces galvanized steel sheets and that is applicable not only to automobile outer panels but also to parts, such as construction materials and electric appliances, that require corrosion resistance after painting.

### Brief Description of Drawings

[Fig. 1] Fig. 1 is a schematic view of a test piece used for evaluating corrosion resistance after painting.
[Fig. 2] Fig. 2 shows a cycle of a corrosion resistance test.
[Fig. 3] Fig. 3 is a schematic view of a test piece used in a postpaint corrosion resistance test. Description of Embodiments

An Al-Zn-coated steel sheet of the present invention will now be described in detail.

An Al-Zn-coated steel sheet of the present invention is a coated steel sheet that has a coating that contains Al as a main component and Zn. An Al-Zn coating constituted by two layers, namely, an interfacial alloy layer (lower layer) present in an interface with a base steel sheet, and an upper layer on the interfacial alloy layer, is disposed on a steel sheet surface. The interfacial alloy layer contains Fe that forms an Fe-Al compound and/or an Fe-Al-Si compound. The upper layer contains a compound of Si and Ca or a compound of Si, Ca, and Al. Ca/Si mass% ratio in the upper layer is 0.72 to 1.4. Si content in the upper layer is 0.1 to 2.0 mass% and Ca content in the upper layer is 0.001 to 2.0 mass%.

In the upper layer, Al content is preferably 50 to 85 mass%, Zn content is preferably 11 to 49.8 mass%, Si content is preferably 0.1 to 2.0 mass%, Ca content is preferably 0.001 to 2.0 mass%, and the balance is preferably Fe and unavoidable impurities. The upper limit of the Fe content is about 2.0 mass%, which is the amount of saturation in the plating bath.

The upper layer preferably does not contain a Si phase composed of simple substance Si. Silicon in the upper layer preferably forms an intermetallic compound with at least one element selected from Al, Ca, and Fe.

The relationship between Si and Ca which is most critical to the present invention will now be described. Typically, Si is added to a plating bath in order to suppress growth of an intermetallic alloy layer which is a lower layer.

Silicon is contained not only in the interfacial alloy layer but also in the upper layer. When a Si phase composed of simple substance Si is formed in the upper layer, the Si phase locally functions as a cathode site, oxygen reduction reaction occurs on the Si phase, Al and Zn dissolve from the α-Al phase and η-Zn phase in the upper layer, and a local cell is formed. As a result, uneven dissolution of the coating readily occurs, blistering readily occurs, and corrosion resistance after painting is degraded.

In contrast, in the present invention, Ca is added to an Al-Zn plating bath that contains Al, Zn, and Si. The composition of an upper layer of a coating formed by using such a plating bath is, as a whole, substantially the same as the composition of the plating bath although Al and Si contents are slightly lower on the interfacial alloy layer side. Accordingly, the composition of the coating upper layer is deemed to be the same as the composition of the plating bath. Addition of Ca to the plating bath enables Si to form CaSi₂, CaAlSi, CaAl₂Si_{1.5}, CaAl₂Si₂, and other Si-Ca compounds and Si-Ca-Al compounds in the upper layer. Unlike simple substance Si, these compounds do not function as local cathode sites. In other words, addition of Ca suppresses formation of a Si phase and suppresses uneven dissolution of a coating, thereby improving corrosion resistance after painting.

In order to obtain good corrosion resistance after painting, the Ca/Si mass% ratio in the upper layer must be 0.72 to 1.4 (0.5 to 1 in terms of molar ratio). If the Ca/Si mass% ratio in the upper layer is less than 0.72, not all of Si atoms in the upper layer can form the compounds described above and Si phases composed of simple substance Si will occur. As a result, uneven dissolution of the coating cannot be sufficiently suppressed and blistering will result. In contrast, when the Ca/Si mass% ratio in the upper layer exceeds 1.4, Ca not used in formation of compounds with Si dissolves in the α-Al phase in the upper layer and the solubility of the entire upper layer is increased. As a result, blistering easily occurs. Thus, the Ca/Si mass% ratio in the upper layer is to be 0.72 to 1.4.

The method for determining the Ca/Si mass% ratio in the upper layer is not particularly limited. For example, the upper layer can be separated by constant-current electrolysis and the solution after the separation can be analyzed by ICP emission spectroscopy to determine the Ca/Si mass% ratio. Specifically, constant-current electrolysis (current density: 5 mA/cm²) may be performed in a 1 mass% salicylic acid-4 mass% methyl salicylate-10 mass% potassium iodide solution so as to separate the upper layer and then the solution after the separation may be analyzed by ICP emission spectroscopy.

The interfacial alloy layer that serves as a lower layer is composed of an Fe-Al compound and/or an Fe-Al-Si compound formed by alloying reactions of Al and Si in the coating solution with Fe at the steel sheet surface as soon as the steel sheet is dipped in the plating solution.

The contents of the components in the coating upper layer will now be described.

In the Al-Zn coating upper layer, the Si content is to be 0.1 to 2.0 mass% and the Ca content is to be 0.001 to 2.0 mass%. In order to suppress growth of the interfacial alloy layer which is a lower layer, 0.1 mass% or more of Si must be added. Growth of the interfacial alloy layer is affected by the plating bath temperature, bath dipping time, and the cooling rate after plating as well as the composition of the plating. In other words, growth of the interfacial alloy layer is promoted when the bath temperature is high, the dipping time is long, or the cooling rate after plating is small. In any instances, growth can be sufficiently suppressed as long as the Si content in the plating bath is 0.8% or more of the Al content. Thus, the Si content in the coating is preferably 0.8% of the Al content or more. At a Si content exceeding 2.0 mass%, a large amount of Si is present in the upper layer, in other words, Si forms large quantities of compounds with Ca, such as CaSi₂, CaAlSi, CaAl₂Si₁₅, and CaAl₂Si₂. These compounds are hard and degrade workability once contained in a large amount. Thus, the upper limit of the Si content is to be 2.0 mass%.

Ca content is 0.001 to 2.0 mass%. In order to Si to be formed into compounds such as CaSi₂, CaAlSi, CaAl₂Si_{1.5}, CaAl₂Si₂, and other Si-Ca compounds or Si-Ca-Al compounds, Ca content must be 0.001 mass% or more in addition to satisfying Ca/Si mass% ratio of 0.72 to 1.4 described above. Excessive addition of Ca, however, increases the solubility of the coating layer as a whole and degrades corrosion resistance after painting. Thus the upper limit is to be 2.0 mass%.

Al content in the upper layer is preferably 50 to 85 mass%. Zn content is preferably 11 to 49.8 mass%. When Al content is 20 to 95 mass%, the upper layer comes to have a two-phase structure constituted by an α-Al phase exhibiting corrosion resistance and a η-Zη phase offering sacrificial protection. Al content that strikes the right balance between corrosion resistance and sacrificial protection is 50 to 85 mass%. As long as Al content is 85 mass% or less and Zn content is 11 mass% or more, Zn content is not excessively small, sacrificial protection for the base steel sheet is not degraded, and red rust is inhibited. Accordingly, Al content is preferably 85 mass% or less and Zn content is preferably 11 mass% or more. Considering the balance with Al, Zn content is preferably 49.8 mass% or less.

As discussed above, the upper layer of the Al-Zn coating preferably contains 50 to 85 mass% Al, 11 to 49.8 mass% Zn, 0.1 to 2.0 mass% Si, and 0.001 to 2.0 mass% Ca.

In a typical operation, elution of elements contained in the steel sheet and equipment in the bath and dissolution of impurities contained in the raw material ingot cause Fe and unavoidable impurities, such as Sr, V, Mn, Ni, Co, Cr, Ti, Sb, Ca, Mo, and B, to mix into the plating bath, in other words, the coating upper layer. Note that the Fe concentration in the plating bath has reached a saturating concentration due to continuous feeding of the steel sheet. Although the Fe saturating concentration is dependent on the plating bath composition, it is usually 2.0 mass% or less. Incorporation of Fe and unavoidable impurities such as Sr, V, Mn, Ni, Co, Cr, Ti, Sb, Ca, Mo, and B is preferably little but the presence of these elements poses no problem as long as the properties of the coating are not affected.

Once a Si phase composed of simple substance Si occurs in the upper layer as described above, uneven dissolution of the coating readily occurs, blistering readily occurs, and corrosion resistance after coating is degraded. Accordingly, the upper layer preferably contains no Si phase composed of simple substance Si. In the present invention, as described above, Si in the upper layer forms compounds with Ca or Ca and Al. In addition, in the present invention, Si in the upper layer preferably forms an intermetallic compound with at least one element selected from Al, Ca, and Fe. The compounds formed in the upper layer can be identified by X-ray diffraction (XRD), electron beam microanalyzer (EPMA), or the like. It is assumed that Si is forming an intermetallic compound with at least one selected from Al, Ca, and Fe if no Si phase composed of simple substance Si is detected by analyzing the central portion of the coated steel sheet in the width direction by X-ray diffraction (Cu-Ka line, tube voltage: 55 kV, tube current: 250 mA).

The coating weight of the Al-Zn coating is preferably 10 g/m² or more per side of the steel sheet in order to ensure corrosion resistance. Although corrosion resistance is improved with an increasing coating weight, the cost also rises. Moreover, spot weldability is degraded as the coating weight increases. Accordingly, the upper limit is preferably 100 g/m². The method for measuring the coating weight is not particularly limited as long as the method used can easily and accurately determine the coating weight. For example, gravimetry (coating weight test method (indirect method) set forth in JIS H 0401:2007), an X-ray fluorescence method, an electrolytic separation method, and other measurement methods may be employed. According to the gravimetry (indirect method), a coated test piece is weighed, the coating film is removed by dissolution with hydrochloric acid, the test piece is weighed again, and the coating weight is determined from the difference in the weight. According to the X-ray fluorescence method, the coating weights of the respective elements in the coating of a coated test piece are determined based on the relationship (calibration curves) between the coating weight and the X-ray fluorescence count of each element constituting the coating obtained by a reference sheet, of which coating weight is known, and then the total of the coating weights is determined. According to the electrolytic separation method, a coated test piece is subjected to constant-current anode dissolution and the coating amount is determined from the electrolysis time. The amount of electricity required for dissolution is sorted according to the atomic ratio of the phases dissolved so as to determine the mass of each element dissolved and the total of the masses of all elements of all phases constituting the coating is assumed to be the coating weight.

Next, a method for producing an Al-Zn-coated steel sheet of the present invention is described. The Al-Zn-coated steel sheet of the present invention is produced in a continuous galvanizing line or the like.

In the plating bath, the Al content is preferably 50 to 85 mass%, the Zn content is preferably 11.0 to 49.8 mass%, the Si content is preferably 0.1 to 2.0 mass%, and the Ca content is preferably 0.001 to 2.0 mass%. The Al-Zn-coated steel sheet described above can be produced by using a plating bath having this composition.

The plating bath for the coated steel sheet of the present invention may contain some elements, such as Fe, Mn, Ni, Cr, Ti, Mo, B, W, Mg, and Sr, other than Al, Zn, Ca, and Si described above. Such a plating bath can be used as long as the effects of the present invention are not impaired. The composition of the coating upper layer can be adjusted by controlling the composition of the plating bath.

If the temperature of the uncoated steel sheet (cold rolled steel sheet) at the entry of the plating bath (hereinafter this temperature may be referred to as an entry sheet temperature) is excessively lower than the plating bath temperature, the plating bath may solidify. If the temperature is excessively higher than the plating bath temperature, dross formation may result. Thus the entry sheet temperature is preferably in the range of (plating bath temperature - 10°C) to (plating bath temperature + 20°C). After the cold rolled steel sheet whose entry sheet temperature is controlled is dipped in a plating bath, the thickness of the coating is adjusted to 10 to 100 g/m² per side by using N₂ gas. Then the steel sheet is cooled by air or N₂ gas. Cooling may be conducted by water cooling, mist cooling, and Al powder spraying instead of using N₂ gas.

As a result, an Al-Zn-coated steel sheet of the present invention is obtained.

The Al-Zn-coated steel sheet of the present invention can be formed into a surface-treated steel sheet by forming a chemical conversion coating and/or an organic resin-containing coating on the surface thereof. The chemical conversion coating can be formed through a chromate treatment or a chromium-free chemical conversion treatment that involves applying a chromate treatment solution or a chromium-free chemical conversion treatment solution to a steel sheet and drying the steel sheet at a steel sheet temperature of 80°C to 300°C without washing with water. The chemical conversion coating may have a single-layer structure or a multilayer structure. Chemical conversion treatment may be performed sequentially for two or more times in order to form a chemical conversion coating having a multilayer structure.

An organic resin-containing single-layer or multilayer coating may be formed on the surface of the coating or the chemical conversion coating. Examples of the coating include polyester resin coatings, epoxy resin coatings, acrylic resin coatings, urethane resin coatings, and fluorine resin coatings. Coatings of these resins partially modified with other resins, such as epoxy-modified polyester resin coatings can also be used. The resin may contain a curing agent, a curing catalyst, a pigment, additives, and the like if needed.

The application method for forming the coating is not particularly limited. Examples of the application method include a coating method that uses a roll coater, curtain flow coating, and spray coating. A coating solution containing an organic resin is applied and heated and dried by means such as hot-air drying, infrared heating, and induction heating so as to form a coating.

Note that the method for producing a surface-treated steel sheet described above is merely an example and does not limit the present invention.

### EXAMPLES

A cold rolled steel sheet having a thickness of 0.8 mm produced by a common method was passed through a continuous galvanizing line to conduct galvanization under conditions shown in Table 1 and to produce an Al-Zn-coated steel sheet. The line speed was 150 m/min, the entry sheet temperature was (plating bath temperature - 10°C) to (plating bath temperature + 20°C), and the coating weight was adjusted to 35 to 65 g/m² per side by gas wiping. The cooling rate after the coating was set to a usual cooling rate and was not particularly limited.

The coating weight was measured according to the coating weight test method (indirect method) set forth in JIS H 0401:2007. The Al-Zn-coated steel sheet produced as mentioned above was analyzed to find the presence or absence of compounds of Si and Al and/or Si, Al, and Ca (α-Al phase, CaSi₂, CaAlSi, CaAl₂Si_{1.5}, CaAl₂Si₂, and other compounds of Si with Al and/or Ca) in the upper layer, the presence or absence of an Fe-Al compound and/or an Fe-Al-Si compound in the interfacial alloy layer (lower layer), and presence or absence of Si phases composed of simple substance Si in the upper layer. Investigation and identification of these were performed by X-ray diffraction (Cu-Kα line, tube voltage: 55 kV, tube current: 250 mA). Element mapping of a mirror-polished cross-section was performed with an electron beam microanalyzer and the compounds formed in the interfacial alloy layer and the upper layer were identified from the element distribution state based on the data of compounds obtained through X-ray diffraction.

The composition of and the Ca/Si mass% ratio in the upper layer were determined as follows. The coating upper layer was separated by constant-current electrolysis (current density: 5 mA/cm²) in a 1 mass% salicylic acid-4 mass% methyl salicylate-10 mass% potassium iodide solution and the solution after separation was analyzed by ICP emission spectroscopy to determine the composition of the coating and measure the Ca/Si mass% ratio in the upper layer.

The composition of the interfacial alloy layer serving as the lower layer was identified to be an Fe-Al compound and/or an Fe-Al-Si compound in all plating bath compositions experimented.

A lap-joint corrosion resistance test (perforation corrosion resistance evaluation) and postpaint corrosion resistance test that uses the width of blistering from a scratched portion after painting for evaluation were performed by using the Al-Zn-coated steel sheet obtained as above.

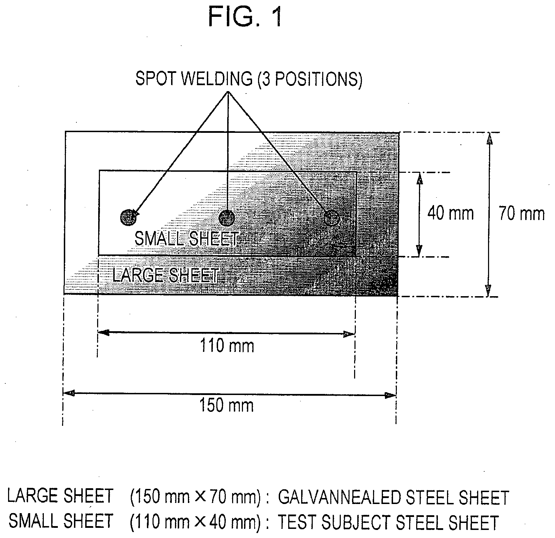

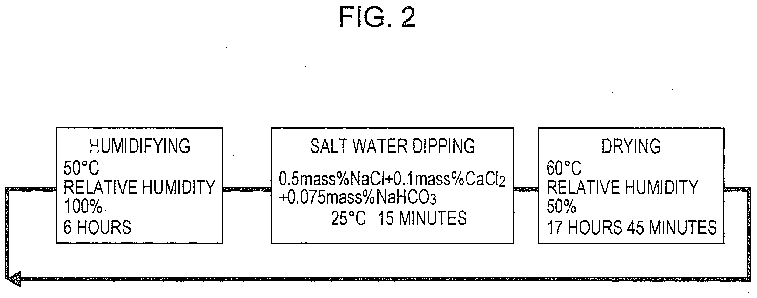

The lap-joint corrosion resistance test involved spot-welding the coated surface of a galvannealed steel sheet (large sheet) having a coating weight of 45 g/m² per side onto the coated surface of an Al-Zn-coated steel sheet (small sheet, test subject steel sheet) prepared as described above to prepare a lap-joint test piece as shown in Fig. 1, subjecting the lap-joint test piece to chemical conversion treatment (zinc phosphate: 2.0 to 3.0 g/m²) and electrodeposition painting (20 ±1 µm), and conducting corrosion resistance test cycles shown in Fig. 2. The corrosion resistance test began with humidifying and performed for 150 cycles. The corrosion resistance of the lap-joint was evaluated as follows:
The lap-joint of the test piece that had undergone the lap-joint corrosion resistance test was disassembled, coatings, rust, etc., were removed, and the depth of corrosion in the base steel sheet was measured with a micrometer. The test piece corroded portion was divided into 10 blocks, each unit block being 20 mm × 15 mm in size, and the maximum corrosion depth of each block was determined as the difference between the sheet thickness of the corroded portion and the sheet thickness of an un-corroded portion. The maximum corrosion depth data of the unit blocks measured were subjected to extreme value statistical analysis by applying a Gumbel distribution so as to determine the mode of the maximum corrosion depth.

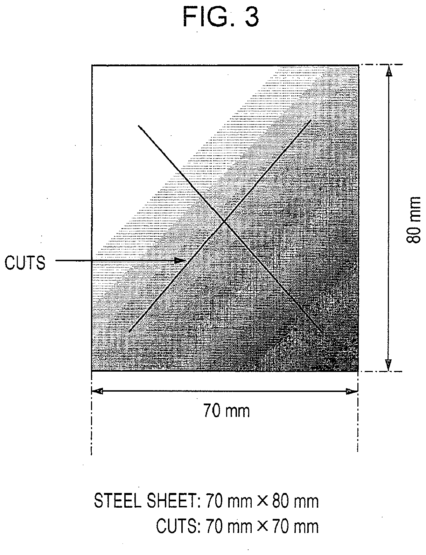

The postpaint corrosion resistance test involved cutting an Al-Zn-coated steel sheet into a 70 mm × 80 mm piece as shown in Fig. 3, performing chemical conversion treatment (zinc phosphate: 1.5 to 3.0 g/m²) and electrodeposition painting (20 ±1 µm) and making cuts to the base steel sheet at positions indicated in Fig. 3 by using a cutter after the electrodeposition painting so as to prepare a test piece. Corrosion resistance test was performed according to JASO M 610 (Cosmetic corrosion test method for automotive parts). Each cycle began with salt spray (0.5 mass% aqueous NaCl solution, 35°C, 2 hours), followed by drying (60°C, relative humidity: 20 to 30%, 2 hours), and ended with humidifying (50°C, relative humidity: 95% or more, 2 hours). A total of 60 cycles were performed. The width of blistering from the cut was measured. Test pieces with a blistering width (maximum value) less than 1.0 mm was rated A (Excellent), those with a blistering width of 1.0 mm or more and less than 1.5 mm were rated B (Good), those with a blistering width of 1.5 mm or more and less than 2.0 mm were rated C (Rather inferior), and those with a blistering width of 2.0 mm or more were rated D (Poor). The rating A is pass, and the ratings B, C, and D are fail.

Table 1 shows the coating composition, the bath temperature, the composition of the upper layer, presence of compounds, the Ca/Si mass% ratio, and presence of the Si phase composed simple substance Si in the upper layer, compounds in the alloy interfacial layer, the coating weight per side, the results of the lap-joint corrosion resistance evaluation, and the results of the postpaint corrosion resistance evaluation.

**[Table 1]**

| No. | Plating bath composition (mass%) | | | | Plating bath temperature (°C) | Composition of upper layer (mass%) | | | | Presence of Si-Al and/or Ca compounds in upper layer *1 | Ca/Si mass% ratio in upper layer | Presence of Siphase compose simple substance Si in upper layer | of Interfacial alloy layer | Coating weight per side (g/m²) | Lap-joint corrosion resistance | Postpaint corrosion resistance | | Note |
|---|---|---|---|---|---|---|---|---|---|---|---|---|---|---|---|---|---|---|
| | Al | Zn | Si | Ca | | Al | Zn | Si | Ca | | | | | | Mode of maximum corrosion depth after corrosion resistance test (mm) | Maximum blistering width (mm) | Rating | |
| 1 | 50 | 46.6 | 1.0 | 0.5 | 590 | 50 | 47.0 | 0.6 | 0.5 | Yes | 0.83 | No | Fe-Al and/or Fe-Al-Si alloy layer | 30 | 0.27 | 0.9 | A | Example |
| 2 | 50 | 45.3 | 1.5 | 1.4 | 590 | 50 | 45.7 | 1.1 | 1.4 | Yes | 1.27 | No | Fe-Al and/or Fe-Al-Si alloy layer | 40 | 0.26 | 0.8 | A | Example |
| 3 | 50 | 46.5 | 2.0 | 0.0 | 590 | 50 | 46.9 | 1.6 | 0.0 | No | 0.00 | Yes | Fe-Al and/or Fe-Al-Si alloy layer | 45 | 0.67 | 2.4 | D | Comparative Example |
| 4 | 55 | 42.0 | 0.9 | 0.4 | 600 | 55 | 42.4 | 0.5 | 0.4 | Yes | 0.87 | No | Fe-Al and/or Fe-Al-Si alloy layer | 20 | 0.18 | 0.8 | A | Example |
| 5 | 55 | 41.7 | 1.0 | 0.8 | 600 | 55 | 42.1 | 0.6 | 0.8 | Yes | 1.34 | No | Fe-Al and/or Fe-Al-Si alloy layer | 20 | 0.26 | 0.9 | A | Example |
| 6 | 55 | 41.8 | 1.5 | 0.1 | 600 | 55 | 42.2 | 1.1 | 0.1 | Yes | 0.05 | Yes | Fe-Al and/or Fe-Al-Si alloy layer | 10 | 0.40 | 1.9 | C | Comparative Example |
| 7 | 55 | 38.0 | 1.6 | 3.6 | 600 | 55 | 38.5 | 1.2 | 3.6 | Yes | 3.07 | No | Fe-Al and/or Fe-Al-Si alloy layer | 45 | 0.27 | 1.4 | B | Comparative Example |
| 8 | 60 | 36.8 | 1.0 | 0.4 | 630 | 60 | 37.3 | 0.5 | 0.4 | Yes | 0.77 | No | Fe-Al and/or Fe-Al-Si alloy layer | 20 | 0.28 | 0.8 | A | Example |
| 9 | 60 | 35.6 | 1.5 | 1.0 | 630 | 60 | 36.1 | 1.0 | 1.0 | Yes | 0.98 | No | Fe-Al and/or Fe-Al-Si alloy layer | 15 | 0.35 | 0.7 | A | Example |
| 10 | 60 | 34.5 | 2.0 | 2.0 | 630 | 60 | 35.0 | 1.5 | 2.0 | Yes | 1.32 | No | Fe-Al and/or Fe-Al-Si alloy layer | 60 | 0.12 | 0.9 | A | Example |
| 11 | 70 | 25.6 | 1.5 | 1.1 | 640 | 70 | 26.2 | 0.9 | 1.1 | Yes | 1.17 | No | Fe-Al and/or Fe-Al-Si alloy layer | 40 | 0.22 | 0.7 | A | Example |
| 12 | 70 | 27.1 | 1.0 | 0.0 | 640 | 70 | 27.7 | 0.4 | 0.0 | No | 0.00 | Yes | Fe-Al and/or Fe-Al-Si alloy layer | 20 | 0.65 | 3.4 | D | Comparative Example |

| No. | Plating bath composition (mass%) | | | | Plating bath temperature (°C) | Composition of upper layer (mass%) | | | | Presence of Si-Al and/or Ca compounds in upper layer *1 | Ca/Si mass% ratio in upper layer | Presence ofSiphase compose simple substance Si in upper layer | of Interfacial alloy layer | Coating weight per side (g/m²) | Lap-joint corrosion resistance | Postpaint corrosion resistance | | Note |
|---|---|---|---|---|---|---|---|---|---|---|---|---|---|---|---|---|---|---|
| | Al | Zn | Si | Ca | | Al | Zn | Si | Ca | | | | | | Mode of maximum corrosion depth after corrosion resistance test (mm) | Maximum blistering width (mm) | Rating | |
| 13 | 70 | 25.8 | 1.5 | 0.8 | 640 | 70 | 26.4 | 0.9 | 0.8 | Yes | 0.85 | No | Fe-Al and/or Fe-Al-Si alloy layer | 20 | 0.36 | 0.9 | A | Example |
| 14 | 71 | 22.5 | 2.2 | 2.5 | 640 | 71 | 23.0 | 1.6 | 2.5 | Yes | 1.56 | No | Fe-Al and/or Fe-Al-Si alloy | 40 | 0.18 | 1.3 | B | Comparative Example |
| 15 | 80 | 16.8 | 1.0 | 0.4 | 660 | 80 | 17.4 | 0.4 | 0.4 | Yes | 1.11 | No | Fe-Al and/or Fe-Al-Si alloy layer | 30 | 0.26 | 0.9 | A | Example |
| 16 | 80 | 15.9 | 1.5 | 0.7 | 660 | 80 | 16.5 | 0.9 | 0.7 | Yes | 0.81 | No | Fe-Al and/or Fe-Al-Si alloy layer | 20 | 0.35 | 0.8 | A | Example |
| 17 | 80 | 12.2 | 5.0 | 1.0 | 660 | 80 | 12.8 | 4.4 | 1.0 | Yes | 0.23 | Yes | Fe-Al and/or Fe-Al-Si alloy layer | 40 | 0.19 | 1.8 | C | Comparative Example |
| Underlines show items outside the scope of the present invention. | | | | | | | | | | | | | | | | | | |
| *1 : Refer to CaSi₂, CaAlSi, CaAl₂Si_{1.5}, CaAl₂Si₂, and other compounds of Si and Al and/or Ca. | | | | | | | | | | | | | | | | | | |

Table 1 shows that in Examples of the present invention, the mode of the maximum corrosion depth after the corrosion test was 0.36 mm or less and the lap-joint corrosion resistance was excellent. Since the width (maximum value) of the blistering from the cuts after 60 cycles was less than 1.0 mm, it was shown that blistering was suppressed and the corrosion resistance after painting was excellent.

## Claims

1. An Al-Zn-coated steel sheet comprising:
an Al-Zn coating layer disposed on a steel sheet surface, the Al-Zn coating layer including two layers which are an interfacial alloy layer present in an interface with a base steel sheet and an upper layer disposed on the interfacial alloy layer,
wherein the upper layer contains compounds of Si and Ca or Si, Ca, and Al, and Ca/Si mass% ratio in the upper layer is 0.72 to 1.4,
the interfacial alloy layer contains an Fe-Al compound and/or an Fe-Al-Si compound, and
in the upper layer, Si content is 0.1 to 2.0 mass% and Ca content is 0.001 to 2.0 mass%,
with the proviso that the Al-Zn-coated steel sheet is not a hot-dip Al-Zn alloy coated steel sheet according to Table 1 below and having a spangle size and Vickers Hardness as given in Table 1 below;
the hot-dip Al-Zn alloy coated steel sheet according to Table 1 below having a cold rolled steel sheet as a base steel sheet with a thickness of 0.35 mm produced by a conventional method;
wherein the hot-dip Al-Zn alloy coated steel sheet according to Table 1 below is produced in a continuous galvanizing line, wherein the composition of the molten bath, and the cooling time of the coated steel sheet, conditions of holding temperature and time of the coated steel sheet after passing through top rolls, and the composition of the upper layer of the hot-dip coating are as given in Table 1 below;
wherein the production of the hot-dip Al-Zn alloy coated steel sheet according to Table 1 below is performed with a molten bath temperature of 600 °C, coating weight of 75 g/m² per side and 150 g/m² for both sides;

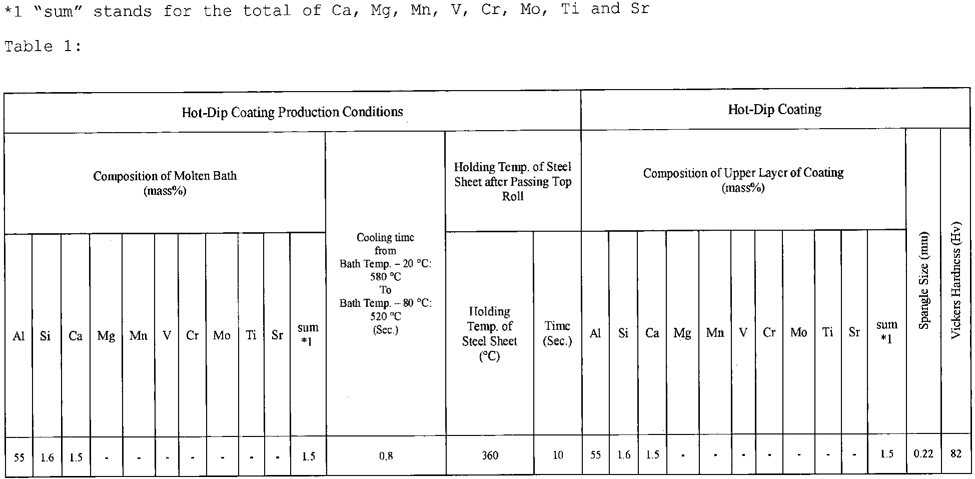

2. The Al-Zn-coated steel sheet according to Claim 1, wherein the upper layer contains 50 to 85 mass% Al, 11 to 49.8 mass% Zn, 0.1 to 2.0 mass% Si, 0.001 to 2.0 mass% Ca, and the balance being Fe and unavoidable impurities.

3. The Al-Zn-coated steel sheet according to Claim 1 or 2, wherein the upper layer does not contain a Si phase composed of simple substance Si.

4. The Al-Zn-coated steel sheet according to any one of Claims 1 to 3, wherein Si in the upper layer forms an intermetallic compound with at least one element selected from Al, Ca, and Fe.

## Patentansprüche

1. Al-Zn-beschichtetes Stahlblech, umfassend:
eine Al-Zn-Überzugsschicht, die auf einer Stahlblechoberfläche angeordnet ist, wobei die Al-Zn-Überzugsschicht zwei Schichten umfasst, die eine Grenzflächenlegierungsschicht, welche an einer Grenzfläche zu einem Basisstahlblech vorhanden ist, und eine auf der Grenzflächenlegierungsschicht angeordnete obere Schicht sind,
wobei die obere Schicht Verbindungen von Si und Ca oder Si, Ca und Al enthält und das Verhältnis der Ca/Si-Massenanteile in der oberen Schicht 0,72 bis 1,4 beträgt,
die Grenzflächenlegierungsschicht eine Fe-Al-Verbindung und/oder eine Fe-Al-Si-Verbindung enthält, und
in der oberen Schicht der Si-Gehalt 0,1 bis 2,0 Massenanteile und der Ca-Gehalt 0,001 bis 2,0 Massenanteile beträgt,
mit der Maßgabe, dass das Al-Zn-beschichtete Stahlblech kein schmelztauchveredeltes Al-Zn-Legierung beschichtetes Stahlblech gemäß nachfolgender Tabelle 1 ist und eine Zinkblumengröße und Vickers-Härte wie in nachfolgender Tabelle 1 angegeben aufweist;
das schmelztauchveredelte Al-Zn-Legierung beschichtete Stahlblech gemäß der nachfolgenden Tabelle 1 ein kaltgewalztes Stahlblech als Grundstahlblech mit einer Dicke von 0,35 mm, hergestellt nach einem herkömmlichen Verfahren, aufweist;
wobei das schmelztauchveredelte Al-Zn-Legierung beschichtete Stahlblech gemäß der nachfolgenden Tabelle 1 in einer kontinuierlich arbeitenden Verzinkungsanlage hergestellt wird, wobei die Zusammensetzung des Schmelzbades und die Abkühlzeit des beschichteten Stahlbleches, die Haltetemperatur und die Zeit des beschichteten Stahlbleches nach Durchlaufen der Oberwalzen und die Zusammensetzung der oberen Schicht der Schmelztauchbeschichtung wie in der nachfolgenden Tabelle 1 angegeben sind;
wobei die Herstellung des schmelztauchveredelten Al-Zn-Legierung beschichteten Stahlblechs gemäß der nachfolgenden Tabelle 1 mit einer Schmelzbadtemperatur von 600 °C, einem Beschichtungsgewicht von 75 g/m² pro Seite und 150 g/m² für beide Seiten erfolgt;

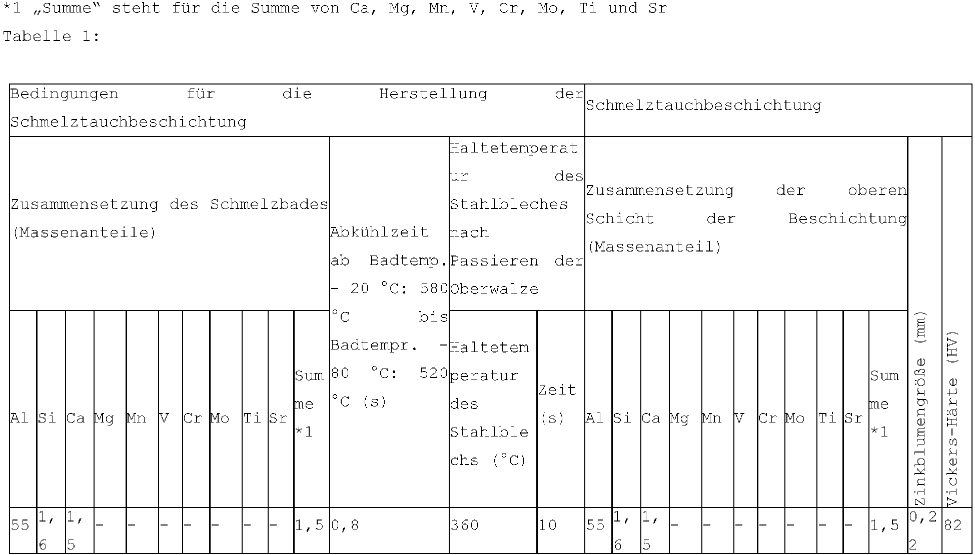

2. Al-Zn-beschichtetes Stahlblech nach Anspruch 1, wobei die obere Schicht 50 bis 85 Massenanteile Al, 11 bis 49,8 Massenanteile Zn, 0,1 bis 2,0 Massenanteile Si, 0,001 bis 2,0 Massenanteile Ca enthält und der Differenzbetrag Fe und unvermeidbare Verunreinigungen ist.

3. Al-Zn-beschichtetes Stahlblech nach Anspruch 1 oder 2, wobei die obere Schicht keine Si-Phase enthält, die aus der einfachen Substanz Si gebildet ist.

4. Al-Zn-beschichtetes Stahlblech nach einem der Ansprüche 1 bis 3, wobei Si in der oberen Schicht eine intermetallische Verbindung mit mindestens einem Element bildet, das ausgewählt ist aus Al, Ca und Fe.

## Revendications

1. Feuille d'acier revêtue d'Al-Zn comprenant :
une couche de revêtement d'Al-Zn disposée sur une surface de la feuille d'acier, la couche de revêtement d'Al-Zn incluant deux couches qui sont une couche d'alliage d'interface présente dans une interface avec une feuille d'acier de base et une couche supérieure disposée sur la couche d'alliage d'interface,
dans laquelle la couche supérieure contient des composés de Si et de Ca ou de Si, de Ca et d'Al, et le rapport en % massique Ca/Si dans la couche supérieure est de 0,72 à 1,4,
la couche d'alliage d'interfe contient un composé de Fe-Al et/ou un composé de Fe-Al-Si, et
dans la couche supérieure, la teneur en Si est de 0,1 à 2,0 % en masse et la teneur en Ca est de 0,001 à 2,0 % en masse,
à condition que la feuille d'acier revêtue d'Al-Zn ne soit pas une feuille d'acier revêtue d'alliage Al-Zn par immersion à chaud selon le Tableau 1 ci-dessous et qu'elle ait une taille de paillette et une dureté Vickers telles qu'indiquées dans le Tableau 1 ci-dessous ;
la feuille d'acier revêtue d'alliage Al-Zn par immersion à chaud selon le Tableau 1 ci-dessous a une feuille d'acier laminée à froid comme feuille d'acier de base d'épaisseur 0,35 mm réalisée par un procédé classique ;
dans laquelle la feuille d'acier revêtue d'alliage Al-Zn par immersion à chaud selon le Tableau 1 ci-dessous est produite dans une ligne de galvanisation continue, dans laquelle la composition du bain fondu, et le temps de refroidissement de la feuille d'acier revêtue, les conditions de température et de temps de maintien de la feuille d'acier revêtue après passage à travers des cylindres supérieurs, et la composition de la couche supérieure du revêtement par immersion à chaud sont tels qu'indiqués dans le Tableau 1 ci-dessous ;
dans laquelle la production de la feuille d'acier revêtue d'alliage Al-Zn par immersion à chaud selon le Tableau 1 ci-dessous est réalisée à une température de bain fondu de 600 °C, avec un poids de revêtement de 75 g/m² par face et de 150 g/m² pour les deux faces ;

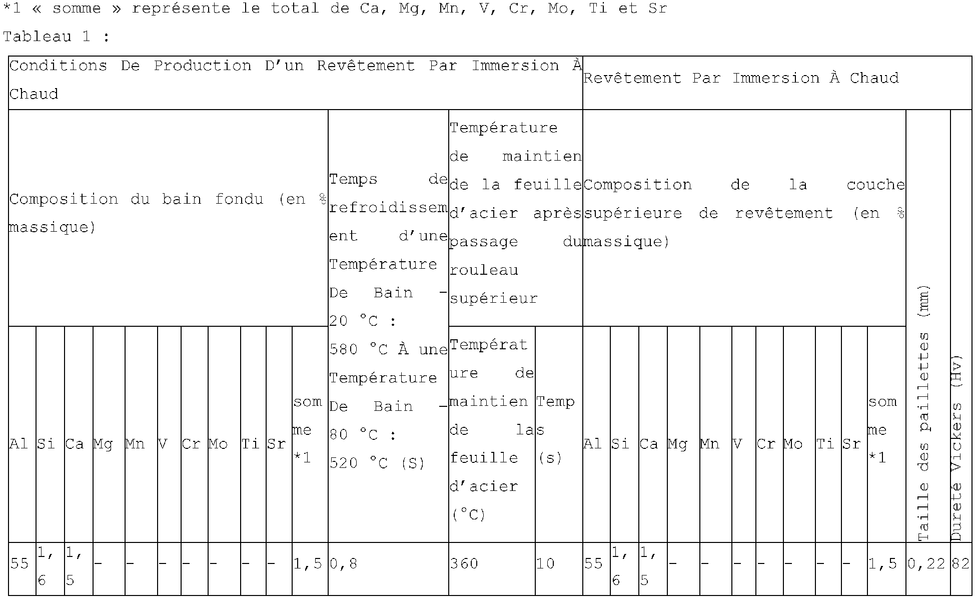

2. Feuille d'acier revêtue d'Al-Zn selon la revendication 1, dans laquelle la couche supérieure contient 50 à 85 % en masse d'Al, 11 à 49,8 % en masse de Zn, 0,1 à 2,0 % en masse de Si, 0,001 à 2,0 % en masse de Ca, et le reste étant du Fe et des impuretés inévitables.

3. Feuille d'acier revêtue d'Al-Zn selon la revendication 1 ou 2, dans laquelle la couche supérieure ne contient pas de phase Si constituée d'une substance simple Si.

4. Feuille d'acier revêtue d'Al-Zn selon l'une quelconque des revendications 1 à 3, dans laquelle Si dans la couche supérieure forme un composé intermétallique avec au moins un élément choisi parmi l'Al, le Ca et le Fe.
